# EUROPEAN PATENT APPLICATION

(11) **EP 3 239 479 A1**
(43) Date of publication of application: **01.11.2017**
(21) Application number: 17167907.9
(22) Date of filing: 25.04.2017
(51) Int. Cl.: F01D 25/12, F02C 7/14, F01D 5/18

(54) **FLUID COOLING SYSTEM FOR A GAS TURBINE ENGINE AND CORRESPONDING GAS TURBINE ENGINE**

(30) Priority: 28.04.2016 US 201615141253
(71) Applicant: General Electric Company, Schenectady, NY 12345 (US)
(72) Inventor: SENNOUN, Mohammed El Hacin, West Chester, OH 45069 (US)
(74) Representative: Williams, Andrew Richard

(57) **Abstract**

A fluid cooling system (400, 500, 600) for a gas turbine engine (100) includes a fluid reservoir (402) positioned within the gas turbine engine (100) and configured to contain a fluid (408). The system also includes a cold sink (415) positioned within the gas turbine engine (100) and having a lower temperature than the fluid (408). The system further includes a heat pipe (416) including a first end (418), a second end (420), and a conduit (422) extending therebetween, the second end (420) thermally coupled to the cold sink (415), and the first end (418) thermally coupled to the fluid (408), where the heat pipe (416) facilitates a transfer of a quantity of heat from the fluid (408) to the cold sink (415).

## Description

### BACKGROUND

The field of the disclosure relates generally to turbine engines and, more particularly, to a system and method for air-oil heat exchange within a gas turbine engine.

Gas turbine engines typically include components requiring lubrication by engine oil. Two such components that represent primary sources of heat in gas turbine engines are engine bearings, engine gearbox, and engine electrical generators such as integrated drive generator (IDG) or variable frequency generator (VFG) systems. Gas turbine engines require fuel-oil coolers and air-oil coolers to keep oil within specific temperature limits. Known air-oil coolers include compact heat exchangers, surface coolers, and compact bar and plate coolers. Such known air-oil coolers form a part of a fan case-mounted oil thermal management architecture in gas turbine engines including oil reservoir and air-oil cooler, along with associated ducting and mounting components.

Known fan case-mounted oil thermal management architectures may represent significant size, weight, fan drag (i.e., dP/P), and complexity costs impacting specific fuel consumption, performance, and maintenance efficiency. Further, use of thermal management architectures including outlet guide vanes (OGVs) as condensers through which oil flows in internal ducts to be cooled therein requires maintenance of a of an oil pressure budget. Furthermore, known air-oil coolers require increasing oil pressure drop budgets to effectively cool lubricating oil in higher performance gas turbine engines.

### BRIEF DESCRIPTION

In one aspect, a fluid cooling system for a gas turbine engine is provided. The gas turbine engine includes a core engine and an annular fan casing. The fluid cooling system includes a fluid reservoir positioned within the gas turbine engine and configured to contain a fluid. The system also includes a cold sink positioned within the gas turbine engine and having a lower temperature than the fluid. The system further includes a heat pipe including a first end, a second end, and a conduit extending therebetween, the second end thermally coupled to the cold sink, and the first end thermally coupled to the fluid, where the heat pipe facilitates a transfer of a quantity of heat from the fluid to the cold sink.

In another aspect, a gas turbine engine is provided. The gas turbine engine includes a core engine, an annular fan casing, and a fluid cooling system. The fluid cooling system includes a fluid reservoir positioned within the gas turbine engine and configured to contain a fluid. The system also includes a cold sink positioned with the gas turbine engine and having a lower temperature than the fluid. The system further includes a heat pipe including a first end, a second end, and a conduit extending therebetween, the second end thermally coupled to the cold sink, and the first end thermally coupled to the fluid, where the heat pipe facilitates a transfer of a quantity of heat from the fluid to the cold sink.

In yet another aspect, a method of cooling a fluid in a gas turbine engine is provided. The gas turbine engine includes a core engine, a fluid reservoir configured to contain a fluid, and a cold sink having a lower temperature than the fluid. The method includes selecting a heat pipe having performance parameters to facilitate following a predetermined heat transfer characteristic including a thermal resistance between the fluid and the cold sink. The method also includes thermally coupling a first end of the heat pipe to the fluid. The method further includes thermally coupling a second end of the heat pipe to the cold sink. The method also includes receiving heat into the first end from the fluid. The method further includes transferring heat through the heat pipe to the cold sink.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIGS. 1-6 show example embodiments of the apparatus and method described herein.
FIG. 1 is a schematic illustration of an exemplary gas turbine engine.
FIG. 2 is a forward to aft perspective view of an exemplary annular fan casing which may be used in the gas turbine engine shown in FIG. 1.
FIG. 3 is an aft to forward perspective view of an exemplary fan module which may be used in the gas turbine engine shown in FIG. 1.
FIG. 4 is a schematic diagram of an exemplary embodiment of a passive thermal management system for a fluid reservoir that may be used in the gas turbine engine shown in FIG. 1.
FIG. 5 is a side elevation view of an exemplary embodiment of a passive thermal management system that may be used with the gas turbine engine shown in FIG. 1.
FIG. 6 is an aft to forward perspective view of an alternative embodiment of a passive thermal management system for an oil tank that may be used in the gas turbine engine shown in FIG. 1.

Although specific features of various embodiments may be shown in some drawings and not in others, this is for convenience only. Any feature of any drawing may be referenced and/or claimed in combination with any feature of any other drawing.

Unless otherwise indicated, the drawings provided herein are meant to illustrate features of embodiments of the disclosure. These features are believed to be applicable in a wide variety of systems comprising one or more embodiments of the disclosure. As such, the drawings are not meant to include all conventional features known by those of ordinary skill in the art to be required for the practice of the embodiments disclosed herein.

### DETAILED DESCRIPTION

In the following specification and the claims, reference will be made to a number of terms, which shall be defined to have the following meanings.

The singular forms "a", "an", and "the" include plural references unless the context clearly dictates otherwise.

"Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value. Here and throughout the specification and claims, range limitations may be combined and/or interchanged, and such ranges are identified and include all the sub-ranges contained therein unless context or language indicates otherwise.

The following detailed description illustrates embodiments of the disclosure by way of example and not by way of limitation. It is contemplated that the disclosure has general application to a method and system for using heat pipes for transferring heat from fluids within a gas turbine engine to cooler portions thereof.

Embodiments of the systems and methods for thermally integrating an oil reservoir and a plurality of outlet guide vanes (OGVs) using heat pipes described herein facilitate maintaining engine oil within predetermined temperature limits during operation of gas turbine engines. Also, the systems and methods for thermally integrating the oil reservoir and the OGVs using heat pipes described herein simplify engine oil thermal management architectures by reducing the number, size, and weight of components. Further, the systems and methods for thermally integrating the oil reservoir and the OGVs using heat pipes described herein enable decreased specific fuel consumption (SFC), reduced fan drag, increased performance, and simplified maintenance of gas turbine engines. Furthermore, the systems and methods for thermally integrating the oil reservoir and the OGVs using heat pipes described herein facilitate effective heat exchange of lubricating oil in gas turbine engines without requiring increased engine oil pressures.

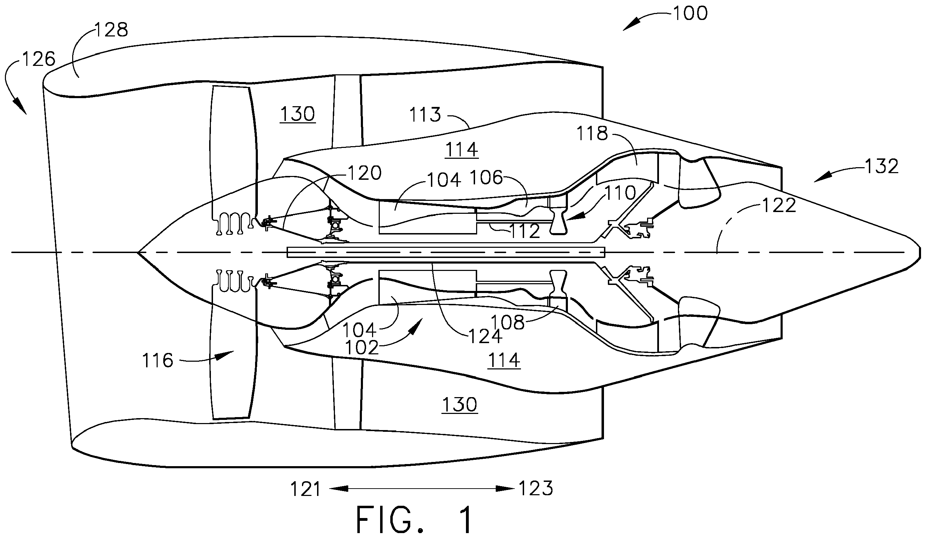

FIG. 1 is a schematic illustration of an exemplary gas turbine engine 100. Gas turbine engine 100 includes a gas generator or core engine 102 that includes a high pressure compressor (HPC) 104, a combustor assembly 106, and a high pressure turbine (HPT) 108 in an axial serial flow relationship on a core engine rotor 110 rotating about a core engine shaft 112. HPC 104, combustor assembly 106, HPT 108, core engine rotor 110, and core engine shaft 112 are located radially inward from a core cowl 113 inside a core undercowl space 114. Gas turbine engine 100 also includes a low pressure compressor or fan 116 and a low pressure turbine (LPT) 118 arranged in an axial flow relationship on a power engine rotor 120.

During operation of exemplary gas turbine engine 100, air flows from a forward 121 end of gas turbine engine 100 along a central axis 122 to an aft 123 end, and compressed air is supplied to HPC 104. The highly compressed air is delivered to combustor assembly 106. Exhaust gas flows (not shown in FIG. 1) from combustor assembly 106 and drives HPT 108 and LPT 118. Power engine shaft 124 drives power engine rotor 120 and fan 116. Also, in the exemplary gas turbine engine 100, an initial air inlet 126 located at forward 121 end of gas turbine engine 100 includes a nacelle 128 defining a circumferential boundary thereof. Nacelle 128 at least partially surrounds core engine 102. Also, nacelle 128 defines a radially outer wall of a bypass duct 130 aft of fan 116. Within bypass duct 130 is core cowl 113 and components of gas turbine engine 100 within core undercowl space 114 described above. Throughout gas turbine engine 100, valves of various types, not shown, are present and control flow of various liquids and gases including, without limitation, lubricating oils, coolants, fuel, intake air, and exhaust gas. At least some valves in gas turbine engine 100 establish temperature gradients between fluids and gases whereby fluids and gases on one side of the valve are at a higher or lower temperature than the other side of the valve. Further, gas turbine engine 100 includes an exhaust outlet 132 at aft 123 end.

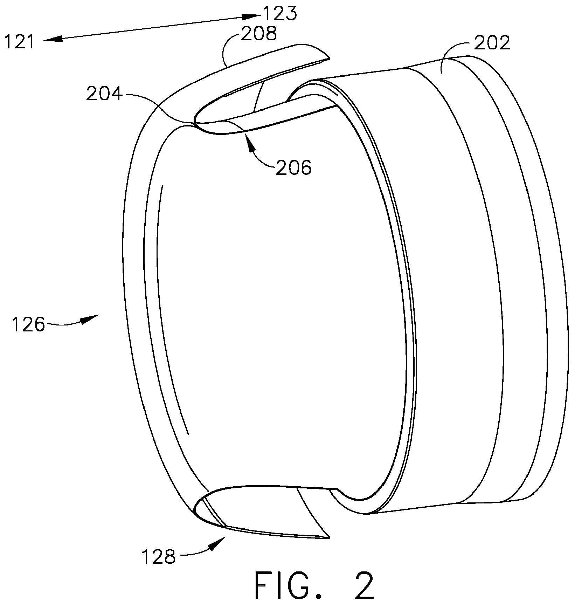

FIG. 2 is a forward to aft perspective view of an exemplary annular fan casing 202 which may be used in gas turbine engine 100 shown in FIG. 1. Nacelle 128 is disposed forward 121 of an annular fan casing 202. Nacelle 128 has a generally "U"-shaped cross-section with a curved portion defining an inlet lip 204, an inner wall 206 extending aft 123 of inlet lip 204 in a generally axial direction, and an outer wall 208 extending aft 123 of inlet lip 204 in a generally axial direction. Annular fan casing 202 is configured to surround fan 116 (not shown in FIG. 2). Inner wall 206 forms a flowpath for air entering air inlet 126, and outer wall 208 is exposed to external air flow.

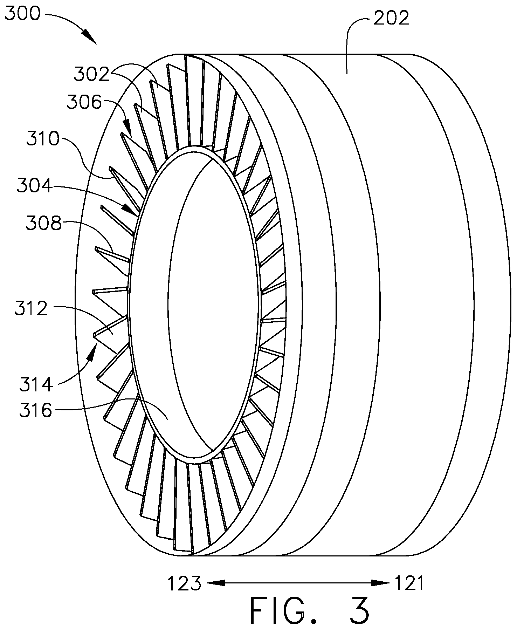

FIG. 3 is an aft to forward perspective view of an exemplary fan module 300 which may be used in gas turbine engine 100 shown in FIG. 1. Fan module 300 includes a plurality of outlet guide vanes (OGVs) 302 coupled to core cowl 113 and nacelle 128 (not shown in FIG. 3), and disposed within annular fan casing 202. Each OGV of the plurality of OGVs 302 includes a root 304, a tip 306, a leading edge 308, a trailing edge 310, and opposed sides 312 and 314. OGVs 302 are airfoil-shaped and are positioned and oriented to remove a tangential swirl component from the air flow exiting an upstream fan, not shown.

In operation, in the exemplary fan module 300, OGVs 302 serve as structural members (sometimes referred to as "fan struts") which connect core cowl 113 and nacelle 128. In alternative embodiments, not shown, these support functions may be served by other or additional components. OGVs 302 are constructed from any material which has adequate strength to withstand the expected operating loads and which can be formed in the desired shape. Use of thermally conductive material for OGVs 302 enhances heat transfer in gas turbine engine 100, not shown.

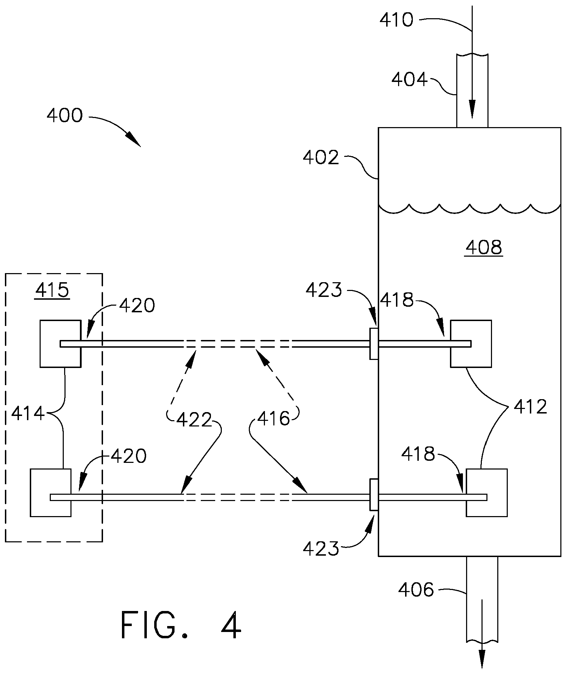

FIG. 4 is a schematic diagram of an exemplary embodiment of a passive thermal management system 400 for a fluid reservoir 402 that may be used in gas turbine engine 100 shown in FIG. 1. In the exemplary embodiment, passive thermal management system 400 includes at least one fluid reservoir 402, including, without limitation, an oil tank containing lubricating oil. Fluid reservoir 402 includes, by way of example only, an inlet 404 and an outlet 406. Fluid reservoir 402 contains a fluid 408 therein, for example lubricating oil. Also, in the exemplary embodiment, passive thermal management system 400 includes at least one heat source 410, including, without limitation, a hot liquid such as lubricating oil from various components of gas turbine engine 100 requiring lubrication. Further, in the exemplary embodiment, passive thermal management system 400 includes at least one evaporator 412 thermally coupled to fluid 408, and at least one condenser 414 thermally coupled to a cold sink 415.

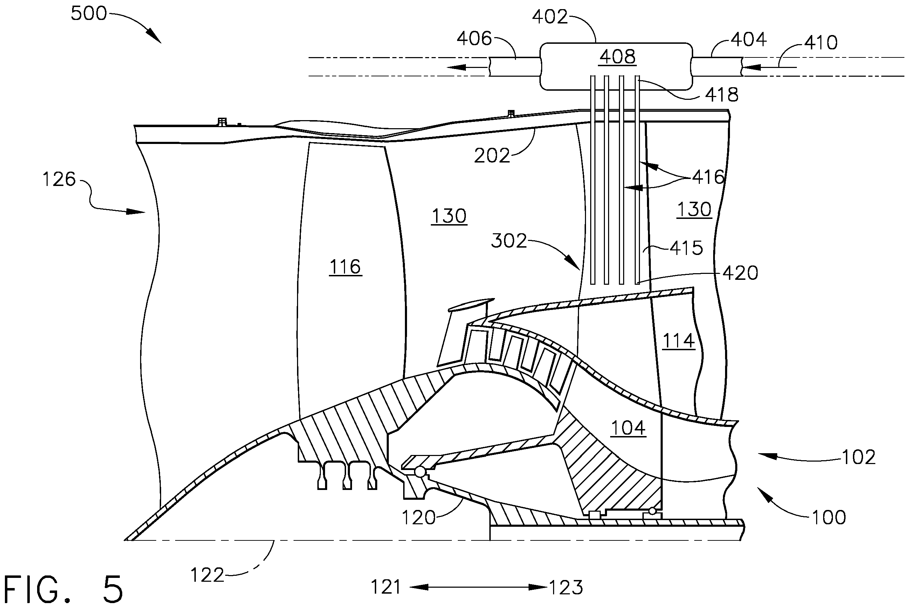

Also, in the exemplary embodiment, passive thermal management system 400 includes at least one heat pipe 416. Heat pipe 416 is thermally coupled to and between evaporator 412 and condenser 414. Further, in the exemplary embodiment, heat pipe 416 includes a first end 418, a second end 420, and a conduit 422 extending therebetween. Heat pipe 416 extends into interior of fluid reservoir 402 through a sealed aperture 423, which is configured to prevent leakage of at least one of fluid 408 and pressure from an interior of fluid reservoir 402. At least a first portion of each heat pipe 416 is wrapped with suitable thermal insulation, not shown. At least a second portion of each second end 420 is uninsulated. First end 418 is disposed upon or within evaporator 412 and thermally coupled thereto. Second end 420 is disposed upon or within condenser 414, and thermally coupled thereto. In other alternative embodiments, not shown, evaporator 412 and condenser 414 are not separate components, but rather are integrally formed as parts of first end 418 and second end 420, respectively. In still other embodiments, not shown, at least one of evaporator 412 and condenser 414 are not present, and heat pipe 416 is thermally coupled to and between heat source 410 and cold sink 415 (located on at least one portion of gas turbine engine 100, including, without limitation, locations outside of gas turbine engine 100, which are of a lower temperature than heat source 410 as further shown and described below with reference to FIG. 5). In yet other embodiments, not shown, at least a portion of heat pipe 416 proximate first end 418 is coiled to facilitate increased surface area (relative to a non-coiled first end 418) for heat exchange between hot fluid 408 and heat pipe 416.

In operation, in the exemplary embodiment, first end 418 and second end 420 are mounted within or upon evaporator 412 and condenser 414, respectively, to facilitate thermal heat exchange therebetween. Also, in operation of the exemplary embodiment, at least one of heat source 410 and fluid 408 are at higher temperatures than condenser 414, including, without limitation, on account of condenser being located further away from gas turbine engine 100 or in a region thereof having a lower temperature than at least one of heat source 410 and fluid 408. Under those conditions, heat from heat source 410 is transmitted through heat pipe 416 from first end 418 to second end 420.

Also, during operation of the exemplary embodiment, each heat pipe 416 has an elongated outer wall with closed ends which together define a cavity (not shown in FIG. 4). The cavity is lined with a capillary structure or wick, not shown in FIG. 4, and holds a working fluid (which is not the same fluid as fluid 408 contained within fluid reservoir 402). Various working fluids, such as gases, water, organic substances, phase change materials, and low-melting point metals are known for use in heat pipes 416. Heat pipes 416 are highly efficient at transferring heat. The number, length, diameter, shape, working fluid, and other performance parameters of heat pipes 416 are selected based on the desired degree of heat transfer during engine operation, as well as during soakback conditions. Furthermore, in operation of the exemplary embodiment, the characteristics of heat pipes 416, evaporators 412, and condensers 414, including, without limitation, their shape, length, diameter, and thickness, may be varied to accommodate their individual orientations and placements within gas turbine engine 100. As such, individual designs for heat pipes 416 may require stronger capillary action to ensure adequate condensate return depending on the particular application within gas turbine engine 100.

Further, in operation of the exemplary embodiment, heat from heat source 410 circulates into evaporator 412 where it heats first end 418 of heat pipe 416. Working fluid within heat pipe 416 absorbs that heat and evaporates. The vapor thus generated then travels through the cavities inside heat pipe 416, and condenses at second end 420, thereby transferring heat from heat source 410 to colder areas of gas turbine engine 100 proximate condenser 414. Condensed working fluid then transports, including, without limitation, by capillary action, from second end 420 back to first end 418 at hotter areas of gas turbine engine 100, including, without limitation, at least one of heat source 410 and fluid 408 contained within fluid reservoir 402, thereby completing the circuit. Furthermore, in operation of the exemplary embodiment, the resultant heat transfer from heat source 410 to condenser 414 facilitates passive thermal management system 400 providing effective prevention of at least one of ice formation (i.e. anti-icing) and ice removal in areas of gas turbine engine 100 proximate condenser 414, depending on the heating rate. Moreover, in operation of the exemplary embodiment, passive thermal management system 400 is passive and, therefore, is sealed and requires no valves. Design parameters including, without limitation, number, size, and location of heat pipes 416 can be selected to provide heat removal and heat transfer as needed, and such design parameters may be varied to facilitate following a predetermined heat transfer characteristic including a thermal resistance between heat source 410 and cold sink 415.

Furthermore, in operation of the exemplary embodiment, depending upon the exact configuration chosen, the system performance may be used only for anti-icing or for de-icing. The gas turbine engine cooling system makes use of heat which is undesired in one portion of an engine and uses that heat where it is needed in another portion of the engine, avoiding both the losses associated with known cooling systems and the need for a separate anti-icing heat source.

FIG. 5 is a side elevation view of an exemplary embodiment of a passive thermal management system 500 that may be used with gas turbine engine 100 shown in FIG. 1. In the exemplary embodiment, fluid reservoir 402 is embodied in an oil tank mounted on a radially outward portion of annular fan casing 202. As shown and described above with reference to FIG. 4, fluid reservoir 402 contains a fluid 408 (e.g., lubricating oil), with hot fluid 408 circulating to reservoir 402 from elsewhere in gas turbine engine 100 through inlet 404. Upon entering reservoir 402 through inlet 404, fluid 408 (e.g., hot oil in) is at a first temperature. Fluid 408 then exchanges heat contained therein with first end 418 of heat pipe 416, whereupon fluid 408 is cooled to a second temperature (lower than first temperature) prior to exiting reservoir 402 for recirculation back to various components of gas turbine engine 100. Fluid 408 gains heat as it flows through and operates within gas turbine engine 100. Also, in the exemplary embodiment, cold sink 415 is embodied in OGV 302 which is at a third temperature (lower than both of first and second temperatures) due to physical conditions of gas turbine engine 100 including, without limitation, distance from core engine 102 (only a portion of which is shown in FIG. 5) and exposure to a cooling air flow path aft 123 of initial air inlet 126 and fan 116.

Also, in the exemplary embodiment, heat pipes 416 are positioned inside a material of construction of OGV 302 including, without limitation, within tubular cavities (not shown in FIG. 5) defined therein. In other embodiments, not shown, heat pipes 416 are not positioned inside OGV 302, but rather are positioned upon one or both of one of opposed sides 312 and 314 of OGV 302, as further shown and described below with reference to FIG. 5. Additional feature numbers are included in FIG. 5 to facilitate cross-referencing FIG. 1 with FIGS. 1-4.

In operation, in the exemplary embodiment, at least one of heat source 410, fluid 408, and fluid reservoir 402 are at higher temperatures than OGV 302 during operation of gas turbine engine 100, including during soakback. As such, OGV 302 is the cold sink 415 to which at least one of second end 420 and condenser 414 (not shown in FIG. 5) are thermally coupled. As shown and described above with reference to FIG. 4, heat source 410 transfers a quantity heat through fluid 408 to first end 418, thus heating first end 418 of heat pipe 416. The quantity of heat is transmitted through heat pipe 416 to the cooler second end 420 thermally coupled to OGV 302, thus passively cooling fluid 408 contained within fluid reservoir 402.

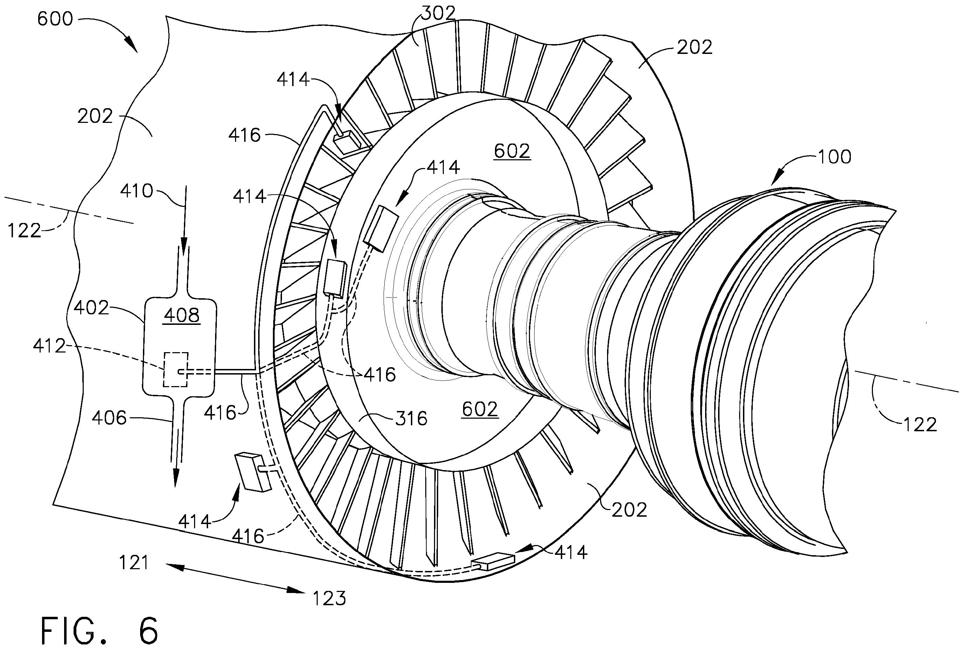

FIG. 6 is an aft to forward perspective view of an alternative embodiment of a passive thermal management system 600 for an oil tank that may be used in gas turbine engine 100 shown in FIG. 1. In the alternative embodiment, passive thermal management system 600 includes at least one fluid reservoir 402 coupled to at least one portion of gas turbine engine 100. Also, in the alternative embodiment, fluid reservoir 402 is embodied in an oil tank containing lubricating oil and mounted on a radially outward portion of annular fan casing 202. At least one heat source 410 is thermally coupled to evaporator 412, as shown and described above with reference to FIG. 4. Further, in the alternative embodiment, gas turbine engine 100 also includes a thrust link support 602. Passive thermal management system 600 also includes at least one condenser 414 coupled to at least one portion of thrust link support 602 at aft 123-facing portions thereof. Annular inner housing 316 is coupled to thrust link support 602 at radially outward portions thereof. In other alternative embodiments, not shown, condenser 414 is thermally coupled to at least one forward 121-facing portion, not shown, of thrust link support 602, either alone, or in combination with at least one aft 123-facing portion thereof.

Also, in the alternative embodiment, passive thermal management system 600 includes at least one heat pipe 416. Heat pipe 416 is thermally coupled to and between evaporator 412 and condenser 414, as shown and described above with reference to FIG. 4. Evaporator 412 is thermally coupled to heat source 410 (e.g., hot fluid 408 contained within fluid reservoir 402). In other alternative embodiments, not shown, heat pipe 416 is thermally coupled to evaporator 412 and also coupled to heat source 410. Further, in the alternative embodiment, heat pipe 416 is further coupled to at least one least one of thrust link support 602, annular inner housing 316, annular fan casing 202, and OGV 302. In other alternative embodiments, not shown, heat pipe 416 is not coupled to at least one of thrust link support 602, annular inner housing 316, annular fan casing 202, and OGV 302, but rather is coupled to other portions of gas turbine engine 100, or, alternatively, not coupled to other portions of gas turbine engine 100.

Further, in the alternative embodiment, passive thermal management system 600 includes at least one condenser 414 thermally coupled to at least one of opposed sides 312 and 314 of at least one OGV 302 disposed between annular fan casing 202 and annular inner housing 316. Furthermore, in the alternative embodiment, heat pipe 416 is thermally coupled to and between evaporator 412 and condenser 414, as shown and described above with reference to FIG. 4. Moreover, in the alternative embodiment, heat pipe 416 is further coupled to at least one of annular fan casing 202 and OGV 302. In other alternative embodiments, not shown, heat pipe 416 is not coupled to at least one of annular fan casing 202 and OGV 302, but rather is coupled to other portions of gas turbine engine 100, or, alternatively, not coupled to other portions of gas turbine engine 100.

Furthermore, in the alternative embodiment, passive thermal management system 600 includes at least one condenser 414 coupled to at least one portion of annular inner housing 316 including, without limitation, on a radially outward surface thereof. In other alternative embodiments, not shown, at least one condenser 414 is thermally coupled to at least one portion of radially inward surfaces of annular inner housing 316, not shown, either alone, or in combination with at least one radially outward surface thereof. Heat pipe 416 is thermally coupled to and between evaporator 412 and condenser 414, as shown and described above with reference to FIG. 4. Moreover, in the alternative embodiment, heat pipe 416 is further coupled to at least one of annular inner housing 316, annular fan casing 202, and OGV 302. In other alternative embodiments, not shown, heat pipe 416 is not coupled to at least one of annular inner housing 316, annular fan casing 202, and OGV 302, but rather is coupled to other portions of gas turbine engine 100, or, alternatively, not coupled to other portions of gas turbine engine 100.

Moreover, in the alternative embodiment, passive thermal management system 600 includes at least one condenser 414 coupled to at least one portion of annular fan casing 202 including, without limitation, on a radially inward surface thereof. Heat pipe 416 is thermally coupled to and between evaporator 412 and condenser 414, as shown and described above with reference to FIG. 4. Also, in the alternative embodiment, at least one heat pipe 416 is thermally coupled to and between condensers 414 thermally coupled to annular inner housing 316, OGV 302, thrust link support 602, annular fan casing 202, and combinations thereof, and at least one evaporator 412 coupled to at least one heat source 410 on at least one fluid reservoir 402 coupled to radially outward portions of annular fan casing 202.

In operation, in the alternative embodiment, heat source 410 (i.e., hot fluid 408 contained within fluid reservoir 402) is typically at a higher temperature than thrust link support 602, OGV 302, annular fan casing 202, and annular inner housing 316 during typical operating conditions of gas turbine engine 100, including during soakback. As such, thrust link support 602, OGV 302, annular inner housing 316, and annular inner housing 316 are cold sinks 415 to which condensers 414 are thermally coupled. As described above with reference to FIG. 4, heat source 410 transfers heat to at least one of evaporator 412 and first end 418 of heat pipe 416. Evaporator 412 heats first end 418 of heat pipe 416. Heat is transmitted through heat pipe 416 to the cooler second end 420 proximate condenser 414 coupled to at least one of thrust link support 602, OGV 302, annular fan casing 202, and annular inner housing 316, thus passively cooling fluid 408 contained within fluid reservoir 402.

The above-described embodiments of systems and methods for thermally integrating an oil reservoir and a plurality of OGVs using heat pipes effectively facilitate maintaining engine oil within predetermined temperature limits during operation of gas turbine engines. Also, the above-described systems and methods for thermally integrating the oil reservoir and the OGVs using heat pipes simplify engine oil thermal management architectures by reducing the number, size, and weight of components. Further, the above-described systems and methods for thermally integrating the oil reservoir and the OGVs using heat pipes enable decreased SFC, reduced fan drag, increased performance, and simplified maintenance of gas turbine engines. Furthermore, the above-described systems and methods for thermally integrating the oil reservoir and the OGVs using heat pipes facilitate effective heat exchange of lubricating oil in gas turbine engines without requiring increased engine oil pressures.

Example systems, apparatus, and methods for thermally integrating oil tank and OGVs using heat pipes are described above in detail. The apparatus illustrated is not limited to the specific embodiments described herein, but rather, components of each may be utilized independently and separately from other components described herein. Each system component can also be used in combination with other system components.

This written description uses examples to describe the disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A fluid cooling system for a gas turbine engine, the gas turbine engine including a core engine and an annular fan casing, said fluid cooling system comprising:
   a fluid reservoir positioned within the gas turbine engine and configured to contain a fluid;
   a cold sink positioned within the gas turbine engine and having a lower temperature than said fluid; and
   a heat pipe comprising a first end, a second end, and a conduit extending therebetween, said second end thermally coupled to said cold sink, said first end thermally coupled to said fluid, wherein said heat pipe facilitates a transfer of a quantity of heat from said fluid to said cold sink.
2. The fluid cooling system in accordance with clause 1, wherein said fluid reservoir comprises an oil tank.
3. The fluid cooling system in accordance with any preceding clause, wherein said fluid comprises a lubricating oil.
4. The fluid cooling system in accordance with any preceding clause, wherein said fluid reservoir is further positioned on a radially outward portion of the annular fan casing.
5. The fluid cooling system in accordance with any preceding clause, further comprising at least one condenser thermally coupled to and between said second end and said cold sink.
6. The fluid cooling system in accordance with any preceding clause, further comprising at least one evaporator thermally coupled to and between said first end and said fluid.
7. The fluid cooling system in accordance with any preceding clause, wherein said cold sink comprises the annular fan casing, an annular inner housing, an outlet guide vane (OGV), and a thrust link support.
8. The fluid cooling system in accordance with any preceding clause, wherein said cold sink comprises an outlet guide vane (OGV), said OGV comprising a cavity defined therewithin, said cavity configured to facilitate positioning said heat pipe within said OGV.
9. The fluid cooling system in accordance with any preceding clause, wherein said first end comprises an increased surface area.
10. A gas turbine engine comprising:
   a core engine;
   an annular fan casing;
   a fluid cooling system comprising:
      a fluid reservoir positioned within said gas turbine engine and configured to contain a fluid;
      a cold sink positioned with said gas turbine engine and having a lower temperature than said fluid;
      a heat pipe comprising a first end, a second end, and a conduit extending therebetween, said second end thermally coupled to said cold sink, said first end thermally coupled to said fluid, wherein said heat pipe facilitates transfer of a quantity of heat from said fluid to said cold sink.
11. The gas turbine engine in accordance with any preceding clause, wherein said fluid reservoir comprises an oil tank, and said fluid comprises a lubricating oil.
12. The gas turbine engine in accordance with any preceding clause, wherein said fluid reservoir is further positioned on a radially outward portion of said annular fan casing.
13. The gas turbine engine in accordance with any preceding clause, further comprising at least one condenser thermally coupled to and between said second end and said cold sink.
14. The gas turbine engine in accordance with any preceding clause, further comprising at least one evaporator thermally coupled to and between said first end and said fluid.
15. The gas turbine engine in accordance with any preceding clause, wherein said cold sink comprises said annular fan casing, an annular inner housing, an outlet guide vane (OGV), and a thrust link support.
16. The gas turbine engine in accordance with any preceding clause, wherein said cold sink comprises an outlet guide vane (OGV), said OGV comprising a cavity defined therewithin, said cavity configured to facilitate positioning said heat pipe within said OGV.
17. A method of cooling a fluid in a gas turbine engine, the gas turbine engine including a core engine, a fluid reservoir configured to contain a fluid, and a cold sink having a lower temperature than the fluid, said method comprising:
   selecting a heat pipe having performance parameters to facilitate following a predetermined heat transfer characteristic including a thermal resistance between the fluid and the cold sink;
   thermally coupling a first end of the heat pipe to the fluid;
   thermally coupling a second end of the heat pipe to the cold sink;
   receiving heat into the first end from the fluid; and
   transferring heat through the heat pipe to the cold sink.
18. The method in accordance with any preceding clause, wherein said thermally coupling a first end of the heat pipe to the fluid comprises defining an increased surface area in the first end to facilitate said transferring heat through the heat pipe to the cold sink.
19. The method in accordance with any preceding clause, wherein said thermally coupling a second end of the heat pipe to the cold sink comprises thermally coupling the second end to an annular fan casing, an annular inner housing, an outer guide vane, and a thrust link support.
20. The method in accordance with any preceding clause, further comprising:
   thermally coupling an evaporator to and between the first end and the fluid; and
   thermally coupling a condenser to and between the second end and the cold sink.

## Claims

1. A fluid cooling system (400,500,600) for a gas turbine engine (100), the gas turbine engine including a core engine (102) and an annular fan casing (202), said fluid cooling system comprising:
a fluid reservoir (402) positioned within the gas turbine engine and configured to contain a fluid (408);
a cold sink (415) positioned within the gas turbine engine and having a lower temperature than said fluid; and
a heat pipe (416) comprising a first end (418), a second end (420), and a conduit (422) extending therebetween, said second end thermally coupled to said cold sink, said first end thermally coupled to said fluid, wherein said heat pipe facilitates a transfer of a quantity of heat from said fluid to said cold sink.

2. The fluid cooling system (400,500,600) in accordance with claim 1, wherein said fluid reservoir (402) comprises an oil tank (402).

3. The fluid cooling system (400,500,600) in accordance with either of claim 1 or 2, wherein said fluid (408) comprises a lubricating oil (408).

4. The fluid cooling system (400,500,600) in accordance with any preceding claim, wherein said fluid reservoir (402) is further positioned on a radially outward portion of the annular fan casing (202).

5. The fluid cooling system (400,500,600) in accordance with any preceding claim, further comprising at least one condenser (414) thermally coupled to and between said second end (420) and said cold sink (415).

6. The fluid cooling system (400,500,600) in accordance with any preceding claim, further comprising at least one evaporator (412) thermally coupled to and between said first end (418) and said fluid (408).

7. The fluid cooling system (400,500,600) in accordance with any preceding claim, wherein said cold sink (415) comprises the annular fan casing (202), an annular inner housing (316), an outlet guide vane (OGV) (302), and a thrust link support (602).

8. The fluid cooling system (400,500,600) in accordance with any preceding claim, wherein said cold sink (415) comprises an outlet guide vane (OGV) (302), said OGV comprising a cavity (415) defined therewithin, said cavity configured to facilitate positioning said heat pipe (416) within said OGV.

9. The fluid cooling system (400,500,600) in accordance with any preceding claim, wherein said first end (418) comprises an increased surface area (418).

10. A gas turbine engine (100) comprising:
a core engine (102);
an annular fan casing (202);
a fluid cooling system (400,500,600) comprising:
a fluid reservoir (402) positioned within said gas turbine engine and configured to contain a fluid (408);
a cold sink (415) positioned with said gas turbine engine and having a lower temperature than said fluid;
a heat pipe (416) comprising a first end (418), a second end (420), and a conduit (422) extending therebetween, said second end thermally coupled to said cold sink, said first end thermally coupled to said fluid, wherein said heat pipe facilitates transfer of a quantity of heat from said fluid to said cold sink.

11. The gas turbine engine (100) in accordance with claim 10, wherein said fluid reservoir (402) comprises an oil tank (402), and said fluid (408) comprises a lubricating oil (408).

12. The gas turbine engine (100) in accordance with either of claim 10 or 11, wherein said fluid reservoir (402) is further positioned on a radially outward portion of said annular fan casing (202).

13. The gas turbine engine (100) in accordance with any of claims 10 to 12, further comprising at least one of:
at least one condenser (414) thermally coupled to and between said second end (420) and said cold sink (415); and
at least one evaporator (412) thermally coupled to and between said first end (418) and said fluid (408).

14. The gas turbine engine (100) in accordance with any of claims 10 to 13, wherein said cold sink (415) comprises said annular fan casing (202), an annular inner housing (316), an outlet guide vane (OGV), and a thrust link support.

15. The gas turbine engine in accordance with any of claims 10 to 14, wherein said cold sink comprises an outlet guide vane (OGV) (302), said OGV comprising a cavity (415) defined therewithin, said cavity configured to facilitate positioning said heat pipe (416) within said OGV.
